# EUROPEAN PATENT SPECIFICATION

(11) **EP 2 360 043 B1**
(45) Date of publication and mention of the grant of the patent: **16.12.2015**
(21) Application number: 11155560.3
(22) Date of filing: 23.02.2011
(51) Int. Cl.: B60J 5/06

(54) **Load carrying vehicle**
Lasttragefahrzeug
Véhicule de transport de charge

(30) Priority: 23.02.2010 GB 201002968
(43) Date of publication of application: 24.08.2011
(73) Proprietor: Regen Waste Limited, Newry Down, BT35 6JQ (GB)
(72) Inventor: Doherty, Aidan, Newry Down (GB)
(74) Representative: Earnshaw, Geoffrey Mark

(56) References cited:
- EP-A1- 0 018 073
- EP-A2- 0 139 935
- DE-C1- 3 619 133
- DE-U1- 8 235 277
- US-A- 5 658 037

## Description

### SUMMARY

A curtain closure structure for a load carrying vehicle, such as a trailer, comprises a flexible curtain that can be open and closed vertically, laterally spaced lifting wires, laterally spaced reinforcement wires, and a horizontal lifting & tensioning beam. The curtain is of sufficient size as to completely cover the side of the trailer when in the down position, and opens sufficiently to allow maximum access to the load carrying area of the vehicle. When in the down position the curtain is tensioned via a series of chains connected to the tensioning beam and a chain tightening mechanism. As the beam is tightened down, reinforcement wires become tensioned thus forming a strong semi-rigid surface to contain loads within the vehicle.

### BACKGROUND

Load carrying vehicles, such as trailers, are available in numerous configurations in order to carry a wide variety of materials in different forms. One such configuration utilises a curtain that when closed forms the side wall of the trailer, but can be drawn to either end of the trailer thus allowing access through the side of the trailer. Vehicles, such as trailers with curtains instead of rigid side panels offer a distinct advantage as they are lighter whilst allowing maximum access to the entire loading area of the vehicle via unobstructed side opening.

However the flexible wall requires significant fixing in order to prevent billowing of the sides, which is dangerous not only to the driver, but also other road users. Also when loaded with loose materials the curtains on existing trailers can bulge out making the trailer un-roadworthy.

On existing trailers the curtain is secured by the use of up to 40 ratchet and strap type fixings located along the length of the curtain. These straps are also used to suspend the curtain on the side of the trailer. On the upper end of the curtain, the strap of the curtain is attached to a roller that runs in a track fixed to the outside edge of roof. When the ratchet on the lower edge of the curtain is tightened the strap running up the curtain becomes tight, thus offering some support to the load inside. As these straps are fabric in nature they do stretch a certain distance without breaking.

The task opening and closing of the curtain along the length of the vehicle requires significant time and human effort to perform. It takes some time to open and close each strap ratchet individually. The ratchets can also hinder the opening and closing of the curtain by becoming snagged or entangled on other parts of the vehicle. The curtains also restrict access at one or other end of the vehicle once they have been opened horizontally. It would therefore be desirable to construct a vehicle which eliminates all of these issues by providing a motorised system that raises and lowers the curtains and can be easily and quickly fastened / tensioned and released once in the lowered position, yet provides the maximum access to the loading area from the side and maximum support for the load when tensioned.

EP 0 139 935 A2 discloses a vehicle having a curtain that is contracted to its raised position by means of traction elements which extend through the curtain and which are wound on tension rollers. Hooking elements provided at a lower end of the curtain engage with a lower edge of the vehicle opening. Tensioning or stretching of the curtain when in a lowered position is effected solely by inflating a cushion over which the curtain is guided at its upper end.

### SUMMARY OF THE INVENTION

This present invention represents an improved design of curtain-sided vehicle with a fast and easily opened curtain side that opens in the vertical direction as opposed to the traditional horizontal direction, by the use of motorised / electrical components / mechanisms.

According to one aspect of the present invention, there is provided a load carrying vehicle comprising at least one flexible curtain partially or wholly extending across a side of the vehicle from an upper vehicle frame member, the or each curtain;
(i) being vertically raisable in a concertina, folded or compressed manner between a transport position and a loading position by a plurality of lifting cables operable by one or more lifting mechanisms located on one or more sides of the vehicle,
(ii) comprising a plurality of vertical reinforcement wires, and
(iii) including one or more tensioning components along its lowermost side adapted to co-operate with one or more tensioning members along the side of the vehicle, and able to tension the curtain down in its transport position when the one or more lifting mechanisms disengage; and wherein the one or more lifting mechanisms are separate from the tensioning members.

Optionally, the load carrying vehicle is a lorry or a trailer.

Optionally, the vehicle comprises two said curtains, each extending along one long side of the vehicle.

Optionally, the or each said curtain includes one or more horizontal rigid support bars, (depending on the height of the curtain and the size of the clear opening required), preferably three said support bars although three is not specific.

The curtain is raised by one or more lifting mechanisms, such as winches or the like, preferably motorised winches, preferably located on one or both ends of the vehicle.

The one or more lifting mechanisms for the curtain(s) are separate from the tensioning members, such that any failure of either does not affect the other. In particular, any failure of either does not lead to any catastrophic failure of the curtain, especially when in use, and all the positioning and tensioning of the curtain has relied purely on only one unit or device.

Preferably, there is only one lifting mechanism required for each curtain on the vehicle. Using only one lifting mechanism reduces the number of lifting points required to raise the curtain.

Optionally, the tensioning component(s) comprise one or more bars, beams, rods or chains or the like, able to extend along a portion or all of the lowermost side of the curtain. Preferably the tensioning component(s) include one or more link pieces such as chains, able to extend beyond the curtain, optionally beyond the lowermost side of the curtain, and adapted to co-operate with the one or more tensioning members.

The tensioning component(s) are preferably able to be tension the curtain against the vehicle at or near the vehicle deck, and optionally at least partly or wholly longitudinally along the lowermost side of the curtain.

Optionally, there are a plurality of tensioning members along the length of the vehicle, so as to provide a series of tensioning points the tensioning component(s) of the curtain, generally being complementary to the number of tensioning components and/or link pieces.

Optionally, the tensioning component(s) are located at or below the level of the bed or deck of the vehicle, such as the trailer bed.

Optionally, the or each tensioning member is a chain-tensioning mechanism or chain, such as or including a ratchet and pawl mechanism.

This also relates to where a flexible strap or other flexible tension carrying material could be used.

The or each curtain further comprises a plurality of vertical reinforcement wires or any other flexible tension carrying material, preferably secured to the upper vehicle frame member.

Optionally, the reinforcement wires are also tensioned with the curtain in its transport position by the tensioning member(s).

Optionally, at least one side, preferably both sides, of the vehicle have a curtain movable between the transport and loading positions in one or more tracks. The present invention also allows for the curtains to be opened along with the rear doors and the roof if required.

Optionally, the or each track is located on a non-curtain side of the vehicle.

Optionally, at least one track, preferably both tracks for each said curtain, are inclined.

Optionally, the vehicle has tracks on each side of the curtain and wherein the distance between the tracks increases towards the lowermost edge of the vehicle.

Optionally, the lifting cables and lifting mechanism(s) do not extend on or across the roof of the vehicle.

Optionally, one or more of the lifting cables extend along the vehicle in parallel with the upper vehicle frame member through one or more pulley blocks between the curtain and the lifting mechanism(s).

Optionally, the roof of the vehicle includes a roof curtain moveable between a transport position and a loading position.

Optionally, the roof curtain is a roller curtain or capable of being a roof curtain.

Optionally, the roof curtain extends wholly or substantially across the roof of the vehicle in its transport position.

Optionally, the roof curtain is moveable between longitudinal upper frame members of the vehicle.

One advantage of the invention is the provision of a collapsible curtain that can be opened and closed vertically thus providing maximum access to the loading area of the vehicle. As previously indicated, the traditional horizontal sliding version leaves a length of the vehicle obstructed at all times.

Another advantage is the construction of the curtain that can be tensioned quickly upon being closed, due to a reduced number of tensioning mechanisms along the length of the trailer.

Another advantage is that tensioning of the or each curtain may be achieved manually, mechanically, or hydraulically, preferably mechanically, or hydraulically to increase ease of use by the vehicle driver or user.

Another advantage is the opening mechanism which requires minimal human effort to open the curtains due to the mechanical and electrical components.

Another advantage is that the new design allows for a much greater retaining capacity whilst providing sufficient support to prevent the curtain billowing or bulging by means of the tensioned lateral strengthening wires which in themselves are significantly stronger than the straps used in existing curtains.

Another advantage, with regard to the transport of loose materials, is that the new design incorporates an opening roof which allows loose materials to be loaded in through the open roof and packed down by means of a digger or other such loading machine.

Another advantage is that the top edge of the curtain is bolted to the edge of the roof providing more strength to the curtain than would be possible with any of the existing sliding curtain arrangements.

### BRIEF DESCRIPTION OF THE DRAWINGS

Embodiments of the present invention will now be described by way of example only and with reference to the accompanying drawings in which:
Fig.1 - is a perspective view of a vehicle with a curtain in a fully closed and tensioned position.
Fig.2 - is a perspective view of the vehicle of Fig.1 with the curtain in a partially opened position.
Fig.3 - is a perspective view of the vehicle of Fig. 1 with the curtain in a fully opened position.
Fig.4 - is an enlarged view of Fig.1 with detailed views of pulley blocks used to raise and lower the curtain located in the main roof beam, a chain tensioning mechanism, and attachment of the lifting wire to the tensioning beam.
Fig.5 - is a view of Fig. 4 with the curtain absent, with a detailed view of tensioning mechanisms.
Fig.6 - is a front vehicle view showing a winching mechanism for raising and lowering the curtains.
Fig. 7 - is a series of three elevation views showing opening of a roof cover.

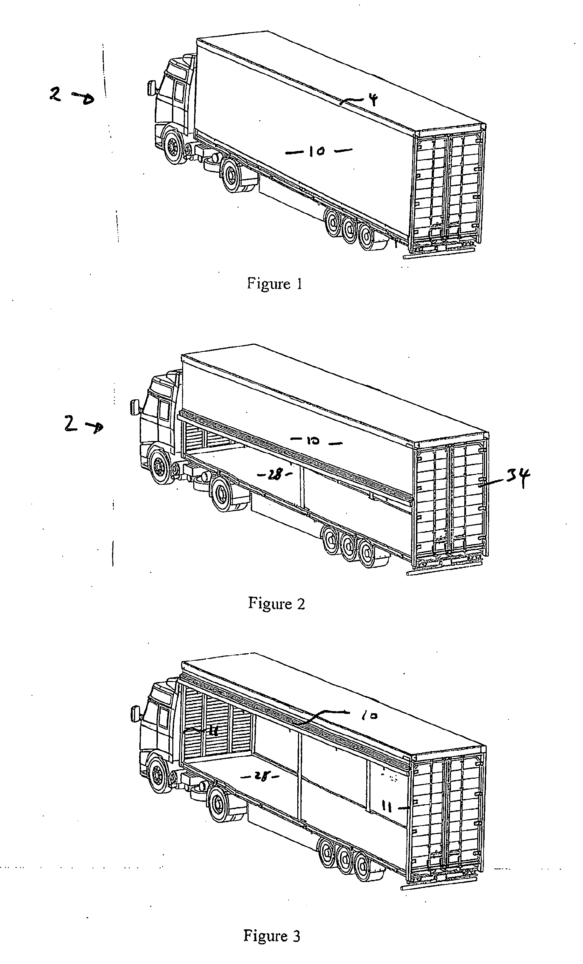

Referring to the drawings, Figure 1 shows a load carrying vehicle being a trailer 2 comprising at least one flexible curtain 10 wholly extending across a side of the trailer 2 from an upper vehicle frame member 4.

In Figure 1, the flexible curtain 10 extends across the side of the vehicle in a closed, tensioned position. Figure 2 shows the flexible curtain 10 in a partially raised position. Figure 3 shows the flexible curtain 10 being fully raised and folded in a concertina manner. The four corner posts 11 supporting the roof ring beam assembly can be seen.

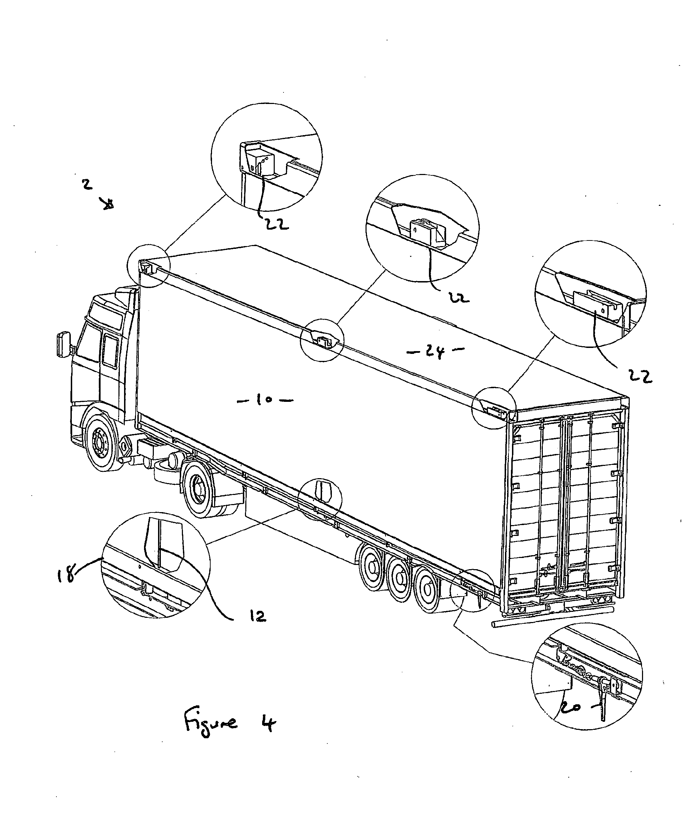

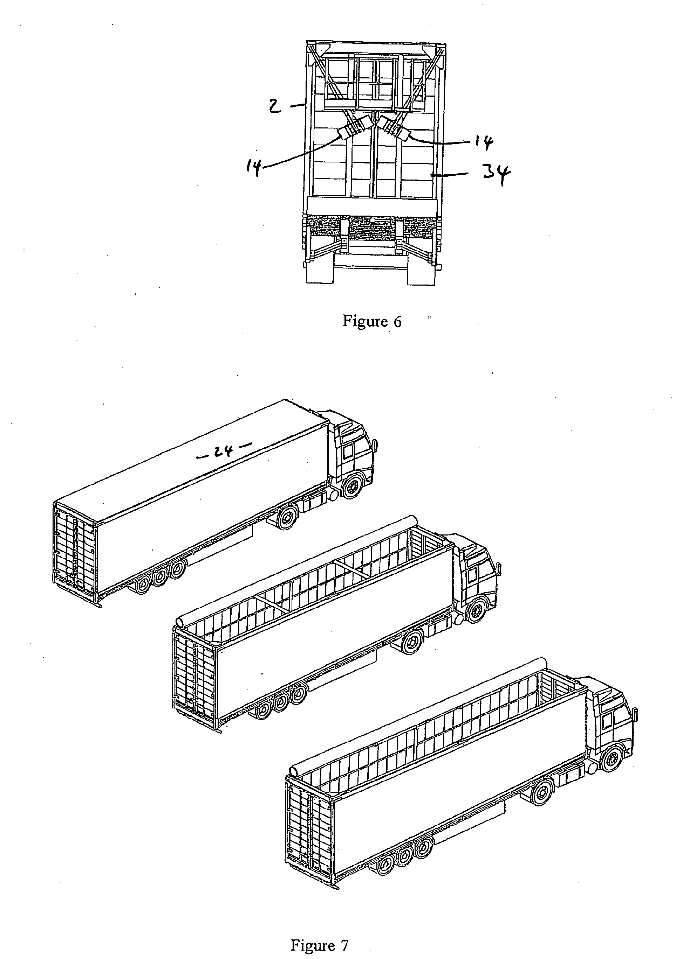

Thus, the figures show a curtain 10 that is vertically raisable in a concertina, folded or compressed manner between a transport position (Fig.1) and a loading position (Fig 2, preferably Fig. 3). This can be carried out by a plurality of lifting cables 12 shown in Figure 4, operable by one or more lifting mechanisms 14 shown in Figure 6, and located on one or more sides of the vehicle 2.

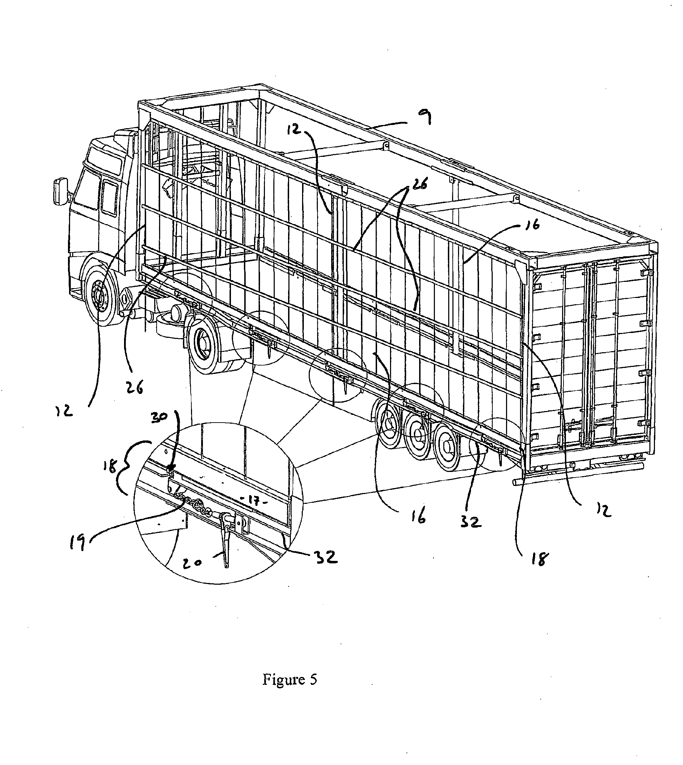

Figure 5 shows the curtain 10 comprising a plurality of vertical reinforcement wires 16, and a tensioning component 18 along its lowermost side, adapted to co-operate with five tensioning members 20 along the side of the vehicle 2, and able to tension the curtain 10 in its transport position.
Figure 4 also shows detailed views of pulley blocks 22 to guide the lifting cables 12 along the upper vehicle frame member 4, preferably the main roof beam, to raise and lower the curtain 10.
Figure 6 shows the ends of the lifting cables 12, generally being wire ropes, connected to lifting mechanisms 14, generally being motorised winches.

The vehicle 2 is constructed from a load carrying surface with four corner posts 11 supporting the roof ring beam assembly 9. The roof ring beam assembly 9 houses a number of pulleys 22 that form a part of the lifting assembly. It also has provision for the attachment of fifty three wire ropes 16 that will form part of the curtain 10. The roof ring beam 9 also has two hinged swing bats to prevent the assembly from deforming lateral when the sides of the vehicle are under pressure but can be opened should a load need to be placed in the vehicle through the roof. When the vehicle is fully assembled the roof could be covered by a roll up weather proof tarpaulin 24 that can be opened to allow access through the roof, as shown in three positions in Figure 7.

The two curtains 10 for the longer sides of the vehicle 2 can be constructed from a light-weight, strong, weatherproof material. There are fifty three steel wire ropes 16 sewn into each curtain to provide strength to the side of the vehicle once the wires have been tightened. At one end, the wires are attached to a tension beam 17 which is also attached to the curtain. At the other end there are reinforced eyelets which are used to secure the curtain to a main roof ring beam 4.

The curtain 10 also has three light weight rigid members 26 constructed from aluminium that run the full length of the curtain that assist in the folding process as the curtain is opened. The curtains can extend around the front and rear corners of the vehicle where they can be secured using a rail roller system. This system is mounted at an angle on the front and rear of the vehicle so that the curtain becomes tight on the corner posts as it is closed, thus forming a weatherproof seal, and releases as the curtain is opened.

On the lower end of the curtain 10 is the tension beam 17 being a part of the tensioning component 18. As previously stated, the wire ropes 16 built into the curtain are attached to the tension beam and the roof ring beam 4. This means that once tensioned, they from a solid structure between the loading area on the floor 28 of the vehicle and the solid roof ring beam assembly 9, with the curtain preventing small pieces of loose material from passing between the wires.

In order to tension the ropes 16, the tension beam 17 is constructed from aluminium with five steel chains 19 extending downwardly therefrom, and attached by means of securing pins. These chains can then be tensioned by passing them through five suitable apertures 30 in a C-beam 32 for connecting to five corresponding tensioning members being chain tightener mechanisms 20, located in the C-beam 32, which will then also tension the wire ropes. The tension beam 17 also has a number of stoppers along its length that prevent the wire ropes from being over tightened.

The rear of the vehicle 2 is constructed with two doors 34 that are the full size of the rear of the vehicle. The doors can be opened out and fold around the corner of the vehicle thus allowing access to rear of the vehicle without opening the sides of the vehicle.

The process of opening the side of the vehicle 2 begins with the releasing of the curtain tension beam 17. The driver/operator releases all five of the chain tightening devices 20 along the side of the vehicle. Upon release of all of the chains 19, the driver/operator depresses an open curtain button at the front of the trailer, thus engaging the relevant lifting mechanism 14, which raises the curtain 10 whilst also engaging a siren and flashing beacon to alert other persons to the fact that the curtain is being raised. This is a safety feature to ensure no one walks too close to the vehicle as the curtain is being raised in case goods in the vehicle could fall out on them. As the curtain rises, it gathers in a tight folded pack on top of the tension beam 17. Once the beam is in the fully raised position, sensors disengage the lift mechanism.

The process of closing the curtain 10 begins with the driver/operator pressing the close curtain button at the front of the vehicle. The lift mechanism 14 is reversed, thus lowering the curtain. As the curtain reaches the fully extended position, sensors disengage the lift mechanism. The driver/operator attaches each of the chains 19 on the curtain tension beam 17 to its respective tightener 20, and then tensions the curtain down to outside edge of the vehicle. Stoppers prevent the beam from being over tightened but allow sufficient tightening so as to form a strong semi rigid surface from the curtain and the integrated steel ropes.

### PARTICULAR EMBODIMENTS

A retractable cover system for the side of a vehicle preferably comprising
a. A flexible retractable curtain extending across the side opening of a vehicle to contain materials within the load carrying area of the vehicle
b. A tensioning member constructed of aluminium attached to the bottom edge of the curtain, with integrated chains attached by securing pins
c. Wire ropes running vertically through the curtain, attached at one end to the tightening member and at the other end to the vehicle roof outer edge, to provide strength to the curtain when tensioned
d. Three wire ropes, to be linked to the lifting mechanism, equispaced along the length of the tensioning member
e. Three supporting members running along the length of the curtain to help the curtain fold in the correct manner.

The retractable cover system for the side of the vehicle is constrained to move in the vertical direction.

The retractable cover system can be held in position and tensioned via the chains indicated above.

The tensioning member as per the above can only be tensioned by a certain amount. Any over tensioning is prevented by stoppers affixed to the lower side of the tensioning member.

The sides of the retractable cover can be held in place by movable rollers that move in the vertical axis as the cover is raised or lowered.

The sides of the cover can become tighter as the cover is lowered due to the angle of travel of the rollers outlined above thus forming a weatherproof seal.

The retractable cover system forms a folded structure when raised to the fully upright position.

The retractable cover is opened using electric / mechanical system which is mounted away from the roof of the vehicle to allow access through the roof.

The cables and pulleys used in the lifting mechanism are preferably positioned inside the aluminium structures used to form the roof ring beam, thus ensuring that there is full access through the roof for loading material, as well as ensuring maximum protection for the components.

## Claims

1. A load carrying vehicle comprising at least one flexible curtain (10) partially or wholly extending across a side of the vehicle from an upper vehicle frame member (4), the or each curtain (10)
(i) being vertically raisable in a concertina, folded or compressed manner between a transport position and a loading position by a plurality of lifting cables (12) operable by one or more lifting mechanisms (14) located on one or more sides of the vehicle,
(ii) comprising a plurality of vertical reinforcement wires (16), and
(iii) including one or more tensioning components (18) along its lowermost side adapted to co-operate with one or more tensioning members (20) along the side of the vehicle, wherein the one or more lifting mechanisms (14) are separate from the tensioning members (20),
**characterised in that** the one or more tensioning components (18) are able to tension the curtain (10) down in its transport position when the one or more lifting mechanisms disengage.

2. A vehicle as claimed in claim 1 wherein the load carrying vehicle is a lorry or a trailer (2).

3. A vehicle as claimed in any one of the preceding claims wherein the vehicle comprises two said curtains (10), each extending along one long side of the vehicle.

4. A vehicle as claimed in any one of the preceding claims wherein the or each said curtain (10) includes one or more horizontal rigid support bars (26), preferably three said support bars (26).

5. A vehicle as claimed in any one of the preceding claims wherein the tensioning components (18) include one or more chains (19) adapted to co-operate with the one or more tensioning members (20).

6. A vehicle as claimed in claim 5 wherein the or each tensioning member (20) is a chain-tensioning mechanism.

7. A vehicle as claimed in any one of the preceding claims wherein the vertical reinforcement wires (16) are secured to the upper vehicle frame member (4).

8. A vehicle as claimed in claim 7 wherein the reinforcement wires (16) are also tensioned with the curtain (10) in its transport position by the tensioning member(s) (20).

9. A vehicle as claimed, in any one of the preceding claims wherein the sides of the or each curtain (10) are movable between the transport and loading positions in one or more tracks.

10. A vehicle as claimed in claim 9 wherein the or each track is located on a non-curtain side of the vehicle.

11. A vehicle as claimed in claim 9 or claim 10 wherein at least one track, preferably both tracks for each said curtain (10), are inclined.

12. A vehicle as claimed in claim 11 having tracks on each side of the curtain (10) and wherein the distance between the tracks increases towards the lowermost edge of the vehicle.

13. A vehicle as claimed in any one of the preceding claims wherein the lifting cables (12) and lifting mechanism(s) (14) do not extend on or across the roof of the vehicle.

14. A vehicle as claimed in any one of the preceding claims wherein one or more of the lifting cables (12) extend along the vehicle in parallel with the upper vehicle frame member (4) through one or more pulley blocks (22) between the curtain (10) and the lifting mechanism(s) (14).

15. A vehicle as claimed in any one of the preceding claims wherein the roof of the vehicle includes a roof curtain moveable between a transport position and a loading position.

16. A vehicle as claimed in claim 15 wherein the roof curtain is a roller curtain.

17. A vehicle as claimed in claim 15 or claim 16 wherein the roof curtain extends wholly or substantially across the roof of the vehicle in its transport position.

18. A vehicle as claimed in any one of claims 15 to 17 wherein the roof curtain is moveable between longitudinal upper frame members (4) of the vehicle.

## Patentansprüche

1. Ein Lasttragefahrzeug, beinhaltend mindestens einen flexiblen Vorhang (10), der sich von einem oberen Fahrzeugrahmenelement (4) teilweise oder vollständig über eine Seite des Fahrzeugs erstreckt, wobei der oder jeder Vorhang (10)
(i) durch eine Vielzahl von Hebeseilen (12), die durch einen oder mehrere Hebemechanismen (14), die sich auf einer oder mehreren Seiten des Fahrzeugs befinden, betreibbar sind, zwischen einer Transportposition und einer Ladeposition vertikal in Harmonikafalten, gefaltet oder komprimiert angehoben werden kann,
(ii) eine Vielzahl von vertikalen Verstärkungsdrähten (16) beinhaltet und
(iii) entlang seiner untersten Seite eine oder mehrere Spannkomponenten (18) umfasst, die angepasst sind, um mit einem oder mehreren Spannelementen (20) entlang der Seite des Fahrzeugs zusammenzuwirken, wobei der eine oder die mehreren Hebemechanismen (14) von den Spannelementen (20) getrennt sind, **dadurch gekennzeichnet, dass** die eine oder die mehreren Spannkomponenten (18) in der Lage sind, den Vorhang (10) in seiner Transportposition nach unten anzuspannen, wenn der eine oder die mehreren Hebemechanismen außer Eingriff gebracht werden.

2. Fahrzeug gemäß Anspruch 1, wobei das Lasttragefahrzeug ein Lastkraftwagen oder ein Anhänger (2) ist.

3. Fahrzeug gemäß einem der vorhergehenden Ansprüche, wobei das Fahrzeug zwei der Vorhänge (10) umfasst, wobei sich jeder entlang einer langen Seite des Fahrzeugs erstreckt.

4. Fahrzeug gemäß einem der vorhergehenden Ansprüche, wobei der oder jeder Vorhang (10) einen oder mehrere horizontale steife Haltevorrichtungen (26), vorzugsweise drei der Haltevorrichtungen (26), umfasst.

5. Fahrzeug gemäß einem der vorhergehenden Ansprüche, wobei die Spannkomponenten (18) eine oder mehrere Ketten (19) umfassen, die angepasst sind, um mit dem einen oder den mehreren Spannelementen (20) zusammenzuwirken.

6. Fahrzeug gemäß Anspruch 5, wobei das oder jedes Spannelement (20) ein Kettenspannmechanismus ist.

7. Fahrzeug gemäß einem der vorhergehenden Ansprüche, wobei die vertikalen Verstärkungsdrähte (16) an dem oberen Fahrzeugrahmenelement (4) gesichert sind.

8. Fahrzeug gemäß Anspruch 7, wobei auch die Verstärkungsdrähte (16) durch das/die Spannelement(e) (20) mit dem Vorhang (10) in seiner Transportposition angespannt werden.

9. Fahrzeug gemäß einem der vorhergehenden Ansprüche, wobei die Seiten des oder jedes Vorhangs (10) in einer oder mehreren Schienen zwischen der Transport- und der Ladeposition bewegt werden können.

10. Fahrzeug gemäß Anspruch 9, wobei sich die oder jede Schiene auf einer Nicht-Vorhangseite des Fahrzeugs befindet.

11. Fahrzeug gemäß Anspruch 9 oder Anspruch 10, wobei mindestens eine Schiene, vorzugsweise beide Schienen für jeden Vorhang (10), geneigt sind.

12. Fahrzeug gemäß Anspruch 11, das auf jeder Seite des Vorhangs (10) Schienen aufweist, und wobei der Abstand zwischen den Schienen in Richtung der untersten Kante des Fahrzeugs zunimmt.

13. Fahrzeug gemäß einem der vorhergehenden Ansprüche, wobei sich die Hebeseile (12) und der Hebemechanismus/die Hebemechanismen (14) nicht auf das oder über das Dach des Fahrzeugs erstrecken.

14. Fahrzeug gemäß einem der vorhergehenden Ansprüche, wobei sich eines oder mehrere der Hebeseile (12) entlang dem Fahrzeug parallel zu dem oberen Fahrzeugrahmenelement (4) durch einen oder mehrere Flaschenzüge (22) zwischen dem Vorhang (10) und dem Hebemechanismus/den Hebemechanismen (14) erstrecken.

15. Fahrzeug gemäß einem der vorhergehenden Ansprüche, wobei das Dach des Fahrzeugs einen Dachvorhang umfasst, der zwischen einer Transportposition und einer Ladeposition bewegbar ist.

16. Fahrzeug gemäß Anspruch 15, wobei der Dachvorhang ein Rollvorhang ist.

17. Fahrzeug gemäß Anspruch 15 oder Anspruch 16, wobei sich der Dachvorhang in seiner Transportposition vollständig oder im Wesentlichen über das Dach des Fahrzeugs erstreckt.

18. Fahrzeug gemäß einem der Ansprüche 15 bis 17, wobei der Dachvorhang zwischen länglichen oberen Rahmenelementen (4) des Fahrzeugs bewegbar ist.

## Revendications

1. Un véhicule porteur de charge comprenant au moins un rideau souple (10) s'étendant partiellement ou intégralement de part et d'autre d'un côté du véhicule depuis un élément de cadre de véhicule supérieur (4), le ou chaque rideau (10)
(i) pouvant être soulevé verticalement d'une manière en accordéon, pliée ou comprimée entre une position de transport et une position de charge par une pluralité de câbles de levage (12) pouvant fonctionner par un ou plusieurs mécanismes de levage (14) situés sur un ou plusieurs côtés du véhicule,
(ii) comprenant une pluralité de fils de renforcement verticaux (16), et
(iii) incluant un ou plusieurs composants de mise sous tension (18) sur son côté le plus bas conçus pour coopérer avec un ou plusieurs éléments de mise sous tension (20) sur le côté du véhicule, dans lequel ces un ou plusieurs mécanismes de levage (14) sont distincts des éléments de mise sous tension (20), **caractérisé en ce que** ces un ou plusieurs composants de mise sous tension (18) sont capables de descendre et mettre sous tension le rideau (10) dans sa position de transport lorsque ces un ou plusieurs mécanismes de levage se désaccouplent.

2. Un véhicule tel que revendiqué dans la revendication 1, le véhicule porteur de charge étant un camion ou une remorque (2).

3. Un véhicule tel que revendiqué dans n'importe laquelle des revendications précédentes, le véhicule comprenant deux dits rideaux (10), chacun s'étendant le long d'un côté long du véhicule.

4. Un véhicule tel que revendiqué dans n'importe laquelle des revendications précédentes dans lequel le ou chaque dit rideau (10) inclut une ou plusieurs barres de support rigides horizontales (26), de préférence trois dites barres de support (26).

5. Un véhicule tel que revendiqué dans n'importe laquelle des revendications précédentes dans lequel les composants de mise sous tension (18) incluent une ou plusieurs chaînes (19) conçues pour coopérer avec ces un ou plusieurs éléments de mise sous tension (20).

6. Un véhicule tel que revendiqué dans la revendication 5 dans lequel le ou chaque élément de mise sous tension (20) est un mécanisme de mise sous tension par chaîne.

7. Un véhicule tel que revendiqué dans n'importe laquelle des revendications précédentes dans lequel les fils de renforcement verticaux (16) sont assujettis sur l'élément de cadre de véhicule supérieur (4).

8. Un véhicule tel que revendiqué dans la revendication 7 dans lequel les fils de renforcement (16) sont également mis sous tension avec le rideau (10) dans sa position de transport par le ou les éléments de mise sous tension (20).

9. Un véhicule tel que revendiqué dans n'importe laquelle des revendications précédentes dans lequel les côtés du ou de chaque rideau (10) sont déplaçables entre les positions de transport et de charge dans un ou plusieurs rails.

10. Un véhicule tel que revendiqué dans la revendication 9 dans lequel le ou chaque rail est situé sur un côté sans rideau du véhicule.

11. Un véhicule tel que revendiqué dans la revendication 9 ou la revendication 10 dans lequel au moins un rail, de préférence les deux rails pour chaque dit rideau (10), sont inclinés.

12. Un véhicule tel que revendiqué dans la revendication 11 ayant des rails sur chaque côté du rideau (10) et dans lequel la distance entre les rails augmente vers le bord le plus bas du véhicule.

13. Un véhicule tel que revendiqué dans n'importe laquelle des revendications précédentes dans lequel les câbles de levage (12) et le ou les mécanismes de levage (14) ne s'étendent pas sur le toit du véhicule ou de part et d'autre de celui-ci.

14. Un véhicule tel que revendiqué dans n'importe laquelle des revendications précédentes dans lequel un ou plusieurs des câbles de levage (12) s'étendent le long du véhicule en parallèle avec l'élément de cadre de véhicule supérieur (4) au travers d'un ou de plusieurs palans (22) entre le rideau (10) et le ou les mécanismes de levage (14).

15. Un véhicule tel que revendiqué dans n'importe laquelle des revendications précédentes dans lequel le toit du véhicule inclut un rideau de toit déplaçable entre une position de transport et une position de charge.

16. Un véhicule tel que revendiqué dans la revendication 15 dans lequel le rideau de toit est un rideau roulant.

17. Un véhicule tel que revendiqué dans la revendication 15 ou la revendication 16 dans lequel le rideau de toit s'étend intégralement ou substantiellement de part et d'autre du toit du véhicule dans sa position de transport.

18. Un véhicule tel que revendiqué dans n'importe laquelle des revendications 15 à 17 dans lequel le rideau de toit est déplaçable entre des éléments de cadre supérieurs longitudinaux (4) du véhicule.
